# EUROPÄISCHE PATENTSCHRIFT

(11) **EP 3 927 578 B1**
(45) Veröffentlichungstag und Bekanntmachung des Hinweises auf die Patenterteilung: **18.10.2023**
(21) Anmeldenummer: 20706664.8
(22) Anmeldetag: 17.02.2020
(51) Int. Cl.: B60P 1/00, B60P 1/36, B60P 1/64, B65G 65/00

(54) **FAHRERLOSES TRANSPORTFAHRZEUG**
DRIVERLESS TRANSPORT VEHICLE
VEHICULE DE TRANSPORT SANS CHAUFFEUR

(30) Priorität: 18.02.2019 DE 102019104051
(43) Veröffentlichungstag der Anmeldung: 29.12.2021
(73) Patentinhaber: A&A Logistik-Equipment GmbH & Co. KG, 21258 Heidenau (DE)
(72) Erfinder: HABEDANK, Gerhard, 21220 Seevetal (DE)
(74) Vertreter: Holz, Christian
(86) Internationale Anmeldenummer: PCT/EP2020/054096
(87) Internationale Veröffentlichungsnummer: WO 2020/169530

(56) Entgegenhaltungen:
- EP-A1- 3 620 422
- CN-A- 109 017 504
- DE-U1-202016 107 020
- US-A1- 2018 072 212

## Beschreibung

Die vorliegende Erfindung betrifft ein Fahrerloses Transportfahrzeug gemäß dem Oberbegriff des Patentanspruchs 1.

In produzierenden Unternehmen ist es stets erforderlich, die Arbeitsstationen mit Teilen zu versorgen, welche dort z.B. zur Verarbeitung und bzw. oder zur Montage benötigt werden. Dies gilt insbesondere für die Massenproduktion, welche üblicherweise als Fließbandproduktion z.B. mittels Bandanlagen bzw. Montagebänder umgesetzt wird. Die Arbeitsstationen können durch Personen, durch Automatisierungsanlagen und bzw. oder durch Industrieroboter z.B. als Roboterzellen betrieben werden. Dies gilt ebenso für Einzelbearbeitungsplätze.

In jedem Fall ist es üblich, Einzelteile, Baugruppen und dergleichen zu den einzelnen Arbeitsstationen zu transportieren und dort vorzuhalten, damit die Tätigkeiten an den Arbeitsstationen kontinuierlich und unterbrechungsfrei ausgeführt werden können. Die Teile werden hierzu zur Arbeitsstation transportiert, dort aufgenommen und bereitgestellt sowie bei Bedarf verwendet, um z.B. einen Montageschritt der Arbeitsstation auszuführen. Auch können von der Arbeitsstation bearbeitete Teile abzutransportieren sein.

Um den Transport der Teile zu erleichtern und zu beschleunigen, werden die Teile üblicherweise zu größeren Einheiten zusammengefasst. Dies geschieht üblicherweise über Förderhilfsmittel wie z.B. Paletten, Container, Behälter, Gitterboxen und Lagerkästen, welche die Teile durch die Bildung von Ladeeinheiten gemeinsam handhabbar machen. Die Förderhilfsmittel können als Ganzes transportiert und der Arbeitsstation zugeführt werden. Leere Förderhilfsmittel bzw. Förderhilfsmittel mit bearbeiteten Teilen können von den Arbeitsstationen wieder abtransportiert werden. Die Förderhilfsmittel können auch als Ladehilfsmittel oder als Ladungsträger bezeichnet werden.

In jedem Fall kann der Transport der Ladungsträger mittels Flurfördergeräten wie z.B. Hubwagen, Gabelstaplern und dergleichen erfolgen, welche üblicherweise von wenigstens einer Person bewegt bzw. bedient werden müssen.

Alternativ ist es zunehmend bekannt, Fahrerlose Transportfahrzeug (FTF; englisch: Automated Guided Vehicle bzw. AGV) für derartige Transportaufgaben einzusetzen. Unter einem Fahrerlosen Transportfahrzeug wird ein Flurfördergerät mit eigenem Fahrantrieb verstanden, welches automatisch gesteuert und berührungslos geführt werden kann. Die Ladungsträger können von dem FTF auf sich drauf getragen oder hinter sich her gezogen und so zur Arbeitsstation gebracht bzw. von dort entfernt werden. Vergleichbare Aufgaben und Lösungen finden sich neben der Produktion auch bei anderen Anwendungen der Logistik wie z.B. in der Lagerhaltung, in der Kommissionierung sowie bei innerbetrieblichen Transporten.

In jedem Fall ist es bisher bekannt, dass die Übergabe eines Ladungsträgers, welcher auf einem Flurfördergerät getragen wird, von dem Flurfördergerät an eine Arbeitsstation im Wesentlichen in der Horizontalen mittels der Lastaufnahmemittel des Flurfördergeräts erfolgt, welche z.B. als Rollenbahnen, Kettenförderer oder Gurtförderer ausgebildet sein können. Zusätzlich kann die zu beliefernde Arbeitsstation angetriebene Rollen oder Förderbänder als Übergabetechnik aufweisen. Hierdurch kann der Ladungsträger in der Horizontalen zwischen dem Flurfördergerät und der Arbeitsstation bewegt werden, um in die eine oder in die andere Richtung übergeben zu werden.

Dabei ist es jedoch erforderlich, dass für die Übergabe des Ladungsträgers in beide Richtungen auch jeweils eine horizontale Bewegung von der Vorrichtung ausgeführt werden kann, welche den Ladungsträger aufweist und abgeben möchte. Mit anderen Worten kann eine Übergabe eines Ladungsträgers von einem Flurfördergerät an eine Arbeitsstation z.B. mittels einer angetriebenen Rollenbahn des Flurfördergeräts erfolgen. Um jedoch einen Ladungsträger von der Arbeitsstation an das Flurfördergerät zu übergeben, muss auch die Arbeitsstation z.B. eine angetriebene Rollenbahn aufweisen, um ihrerseits einen Ladungsträger dem Flurfördergerät anreichen zu können. Dies führt zu einem entsprechenden Aufwand bei den Arbeitsstationen, welcher sich in entsprechenden Kosten niederschlagen sowie Bauraum erfordern kann. Hierdurch können pro Übergabestelle der Ladungsträger zusätzliche Kosten für die Herstellung sowie im Betrieb durch den Verbrauch elektrischer Energie, durch Wartungskosten und dergleichen entstehen.

Diese Kosten treten insbesondere dann auf, falls eine bestehende Produktion oder sonstige Anwendung der Logistik, welche bisher von Personen mittels manuell bewegter bzw. betriebener Flurfördergeräte unterstützt wurde, auf die Zusammenarbeit mit Fahrerlosen Transportfahrzeugen umgestellt werden soll. Dann sind die Arbeitsstationen nachträglich mit Flurfördergeräten wie z.B. mit Rollenbahnen auszurüsten, um Ladungsträger an ein Fahrerloses Transportfahrzeug übergeben zu können, da diese Tätigkeit bisher von Personen übernommen wurde. Dies kann zu einem nicht unerheblichen Aufwand mit entsprechend hohen Kosten führen.

Auch sind die Bewegungen z.B. der angetriebenen Rollenbahnen des Flurfördergeräts und der Arbeitsstation miteinander zu synchronisieren, damit z.B. eine nicht-angetriebene und hierdurch feststehende Rollenbahn des Flurfördergeräts die Übergabe des Ladungsträgers von der Arbeitsstation nicht blockieren bzw. behindern kann. Dies kann seinerseits zu einem erhöhten Aufwand an Datenverarbeitung und Kommunikation in Form von Rechenleistung, Sende- und Empfangskomponenten und dergleichen sowohl bei dem Flurfördergerät als auch bei der Arbeitsstation führen. Insbesondere kann hierdurch überhaupt eine Kommunikation zwischen Flurfördergerät und Arbeitsstation erforderlich werden. Dies kann insbesondere bei Fahrerlosen Transportfahrzeugen der Fall sein.

Dokument DE 20 2016 107020 U1 offenbart ein gattungsgemäßes fahrerloses Transportfahrzeug.

Eine Aufgabe der vorliegenden Erfindung ist es, ein Fahrerloses Transportfahrzeug der eingangs beschriebenen Art bereit zu stellen, welches ein Förderhilfsmittel selbsttätig von einer Arbeitsstation oder dergleichen übernehmen sowie an die Arbeitsstation oder dergleichen übergeben kann. Dies soll insbesondere möglichst einfach, kostengünstig und bzw. oder flexibel erfolgen. Zumindest soll eine Alternative zu bekannten Lösungen bereitgestellt werden.

Die Aufgabe wird erfindungsgemäß durch ein Fahrerloses Transportfahrzeug mit den Merkmalen des Patentanspruchs 1 gelöst. Vorteilhafte Weiterbildungen sind in den Unteransprüchen beschrieben.

Somit betrifft die Erfindung ein Fahrerloses Transportfahrzeug mit einem Gestell, welches ausgebildet ist, ein Förderhilfsmittel aufzunehmen. Derartige Fahrerlose Transportfahrzeuge sind bekannt und werden bereits eingesetzt, Förderhilfsmittel wie eingangs beschrieben zu transportieren. Das Gestell kann insbesondere kastenförmig, rechteckig und flach ausgebildet sein.

Das erfindungsgemäße Fahrerlose Transportfahrzeug ist durch wenigstens ein Verfahrelement gekennzeichnet, welches ausgebildet ist, in wenigstens einer horizontalen Richtung gegenüber dem Gestell wenigstens einseitig über dessen äußere Maße hinaus ausgefahren sowie eingefahren zu werden, wobei das Verfahrelement ferner ausgebildet ist, das Förderhilfsmittel mit sich mit zu führen. Die äußeren Maße des Gestells des Fahrerlosen Transportfahrzeugs können durch dessen äußeren Rand bzw. durch dessen äußere Kante in der relevanten horizontalen Richtung gebildet werden.

Die horizontale Richtung kann sowohl die Längsrichtung als auch die Querrichtung des Fahrerlosen Transportfahrzeugs sein, welche sich senkrecht zueinander sowie sich Beide senkrecht zur vertikalen Richtung erstrecken. Die Wahl, in welche der beiden horizontalen Richtungen das Verfahrelement beweglich ist, kann je nach Anwendungsfall getroffen werden, für den das erfindungsgemäße Fahrerlose Transportfahrzeug umgesetzt werden soll.

Auf diese Art und Weise kann ein Aufnehmen und ein Abgeben eines Förderhilfsmittels je nach Ausgestaltung des Verfahrelements bzw. dessen Verfahrrichtung in der Horizontalen erfolgen, was diese Vorgänge vergleichsweise einfach und mit möglichst wenig Kraft und Energieaufwand umsetzbar machen kann, da kein Anheben des Gewichts der Förderhilfsmittels erfolgen muss. Hierzu kann der Bereich des Fahrerlosen Transportfahrzeugs wie z.B. dessen Oberseite des Gestells, welcher das Förderhilfsmittel aufnehmen kann, feststehend auf derselben Höhe wie die korrespondierende Aufnahme einer Arbeitsstation angeordnet sein, so dass kein Höhenunterschied zu überwinden ist. Alternativ kann der Bereich des Fahrerlosen Transportfahrzeugs, welcher das Förderhilfsmittel aufnehmen kann, auch in der vertikalen Richtung verfahrbar ausgebildet sein, so dass dieser Bereich des Fahrerlosen Transportfahrzeugs je nach Arbeitsstation auf dieselbe Höhe wie die korrespondierende Aufnahme der Arbeitsstation gebracht werden kann. Dies kann zwar zu einem erhöhten konstruktiven Aufwand sowie zu wenigstens einem weiteren Antrieb führen, jedoch die Flexibilität der Verwendung des erfindungsgemäßen Fahrerlosen Transportfahrzeugs erhöhen.

Es ist dabei auch denkbar, das Verfahrelement, vorzugsweise inklusive einer weiter unten näher beschriebenen Verfahrelementführung, gegenüber dem Gestell drehbar, vorzugsweise um ca. 90°, auszubilden, so dass das Verfahrelement je nach Drehstellung in der Querrichtung als horizontale Richtung oder in der Längsrichtung als horizontale Richtung ein- und ausgefahren werden kann. Dies kann zwar zu einem erhöhten konstruktiven Aufwand sowie zu wenigstens einem weiteren Antrieb führen, jedoch die Flexibilität der Verwendung des erfindungsgemäßen Fahrerlosen Transportfahrzeugs erhöhen.

Vorzugsweise ist das Verfahrelement dazu ausgebildet, in der Querrichtung des Fahrerlosen Transportfahrzeugs verfahren zu werden, d.h. senkrecht zu der Längsrichtung, welche üblicherweise der Fahrt- bzw. Bewegungsrichtung bzw. der bevorzugten Fahrt- bzw. Bewegungsrichtung des Fahrerlosen Transportfahrzeugs entspricht. Somit kann das Förderhilfsmittel von dem Fahrerlosen Transportfahrzeug vorzugsweise seitlich aufgenommen und abgegeben werden, was dahingehend vorteilhaft sein kann, dass das Fahrerlose Transportfahrzeug in seiner Längs-, Fahrt- bzw. Bewegungsrichtung seitlich parallel an eine Arbeitsstation heranfahren, das Förderhilfsmittel in der Querrichtung seitlich übergeben bzw. übernehmen und anschließend seine Fahrt in oder entgegengesetzt der vorangehenden Bewegungsrichtung fortsetzen kann. Dies kann zusätzliche Rangierbewegungen des Fahrerlosen Transportfahrzeugs gegenüber der Arbeitsstation vermeiden.

Das Verfahrelement kann als beweglicher Teil eines Schienensystems ausgebildet sein, dessen feststehender Teil als Verfahrelementführung feststehend mit dem Gestell verbunden sein kann. Hierdurch kann eine relative Beweglichkeit des Verfahrelements gegenüber dem Gestell ermöglicht werden. Das Verfahrelement kann mittels einer Gleitführung, einer Rollenführung und dergleichen beweglich gegenüber dem Gestell gelagert sein.

Die Bewegung des Verfahrelements gegenüber dem Gestell kann über unterschiedliche Antriebsprinzipien umgesetzt werden. Beispielsweise kann ein Zylinder in der horizontalen Richtung einstufig oder mehrstufig aus- und eingefahren werden, um ein Ausfahren und Einfahren des Verfahrelements zu ermöglichen. Hierzu kann der Zylinder in sich längenveränderlich ausgebildet und mit dem einen Ende an der Verfahrelementführung bzw. an dem Gestell und mit dem gegenüberliegenden Ende an dem Verfahrelement feststehend angeordnet sein. Der Zylinder kann hydraulisch oder pneumatisch betrieben werden.

Vorzugsweise kann ein elektrischer Antrieb verwendet werden, um ein Ausfahren und Einfahren des Verfahrelements zu ermöglichen. Dies kann vorteilhaft sein, da elektrische Energie des Fahrerlosen Transportfahrzeugs direkt für den elektrischen Antrieb verwendet werden kann und nicht in hydraulischen oder pneumatischen Druck gewandelt werden muss. Die Bewegung kann direkt z.B. mittels wenigstens eines Lineardirektantriebs oder indirekt z.B. mittels eines elektrischen Antriebs z.B. als Spindelantrieb in Kombination mit einer horizontal ausgerichteten Hubschere erfolgen. Dies kann jeweils einstufig oder mehrstufig erfolgen.

Besonders vorzugsweise kann ein elektrisch angetriebener Zahnstangenantrieb verwendet werden, welcher einen vergleichsweise großen Verfahrweg ermöglichen kann. Insbesondere kann dies zu beiden Seiten hin ermöglicht werden. Auch kann ein Zahnstangenantrieb üblicherweise platzsparend und bzw. oder kostengünstig realisiert werden.

Das Verfahren des Verfahrelements kann zumindest zu einer Seite des Gestells des Fahrerlosen Transportfahrzeugs erfolgen, d.h. im Falle einer Bewegung in der Querrichtung entweder zur linken oder zur rechten Seite hin. Dies kann die Umsetzung der Führung des Verfahrelements sowie dessen Antrieb einfacher halten als bei einer beidseitigen Verfahrbarkeit, welche jedoch die Flexibilität des Fahrerlosen Transportfahrzeugs erhöhen kann, wie weiter unten noch näher beschrieben werden wird.

Hierdurch kann das Verfahrelement über die äußeren Maße des Gestells des Fahrerlosen Transportfahrzeugs hinaus ausgefahren werden, um sich einem aufzunehmenden Förderhilfsmittels anzunähern, welches sich in einer Arbeitsstation befindet, bzw. um ein abzugebendes Förderhilfsmittel einer Arbeitsstation anzunähern, welche das Förderhilfsmittel aufnehmen soll. Die Distanz, welche von dem Verfahrelement über die äußere Maßen des Gestells des Fahrerlosen Transportfahrzeugs hinaus zu der Arbeitsstation hin überbrückt werden soll, kann vom Anwendungsfall abhängen, so dass das Verfahrelement entsprechend ausgelegt werden kann. Üblicherweise kann das Fahrerlose Transportfahrzeug in einem Abstand zur Arbeitsstation positioniert werden, welcher möglichst gering ist, jedoch eine Kollision sicher ausschließen kann.

Das Mitsichmitführen des Förderhilfsmittels seitens des Verfahrelements kann je nach Anwendungsfall und Förderhilfsmittel erfolgen. Es kann eine formschlüssige und bzw. oder kraftschlüssige Verbindung zwischen dem Verfahrelement bzw. einer Komponente des Verfahrelements und dem Förderhilfsmittel hergestellt werden, so dass das Förderhilfsmittel von dem Verfahrelement mit sich mit bewegt bzw. geführt werden kann. Dies gilt sowohl für ein von dem Fahrerlosen Transportfahrzeug aufgenommenes Förderhilfsmittel, welches durch das Verfahren des Verfahrelements samt Förderhilfsmittel an eine Arbeitsstation abgegeben werden soll als auch umgekehrt beim Entnehmen eines Förderhilfsmittels von einer Arbeitsstation mittels des Verfahrelements zum Fahrerlosen Transportfahrzeug hin. Wurde das Förderhilfsmittel an eine Arbeitsstation abgegeben, kann die Verbindung gelöst werden. Wurde das Förderhilfsmittel von dem Fahrerlosen Transportfahrzeug aufgenommen, so kann die Verbindung bestehen bleiben, um das Förderhilfsmittel während der Fahrt sicher halten zu können.

Erfindungsgemäß kann somit seitens des Fahrerlosen Transportfahrzeugs ein Förderhilfsmittel selbsttätig von einer Arbeitsstation oder dergleichen übernommen sowie an die Arbeitsstation übergeben werden. Hierdurch kann die Notwendigkeit der Arbeitsstation, eine Übergabe eines Förderhilfsmittels durchzuführen, vermieden werden, was entsprechende Kosten der Arbeitsstation, insbesondere im Falle einer Nachrüstung, vermeiden kann. Auch kann eine Koordination zwischen dem Fahrerlosen Transportfahrzeug und der Arbeitsstation bei einer Übergabe in beide Richtungen vermieden werden, weil dies jeweils durch das Fahrerlose Transportfahrzeug selbsttätig alleinig durchgeführt werden kann.

Dabei kann ein Verfahrelement verwendet werden, welches z.B. an dem Gestell des Fahrerlosen Transportfahrzeugs derart angeordnet sein kann, dass das Verfahrelement in einen Zwischenraum des Gestells eines Förderhilfsmittels hinein verfahren werden kann, um sich dort mit dem Förderhilfsmittel zu verbinden und dieses mit sich mit führen zu können. In diesem Fall kann die Anordnung des Verfahrelements am Gestell des Fahrerlosen Transportfahrzeugs etwa mittig in der Richtung senkrecht zur horizontalen Richtung erfolgen, so dass ein Verkanten des Förderhilfsmittels bei der Bewegung mit dem Verfahrelement mit vermeiden werden kann.

Alternativ können auch zwei Verfahrelemente verwendet werden, welche z.B. an dem Gestell des Fahrerlosen Transportfahrzeugs derart angeordnet sein können, dass jedes Verfahrelement in eine Gabelaufnahme des Gestells eines Förderhilfsmittels hinein verfahren werden kann, um sich dort mit dem Förderhilfsmittel zu verbinden und dieses mit sich mit führen zu können. Hierdurch können die Verfahrelemente vergleichbar den Gabeln eines Gabelstaplers oder dergleichen verwendet werden.

Gemäß einem Aspekt der Erfindung ist das Verfahrelement ausgebildet, in wenigstens einer horizontalen Richtung gegenüber dem Gestell beidseitig über dessen äußere Maße hinaus ausgefahren sowie eingefahren zu werden. Dies kann die Flexibilität der Anwendungen des Fahrerlosen Transportfahrzeugs erhöhen, da nun zu beiden Seiten hin Förderhilfsmittel abgegeben sowie von dort aufgenommen werden können. Somit kann das Fahrerlose Transportfahrzeug z.B. in beiden Richtungen seitlich parallel an eine Arbeitsstation heranfahren und je nach Ausrichtung das Förderhilfsmittel nach links oder nach rechts abgeben bzw. von dort aufnehmen. Ein ggfs. erforderliches Umdrehen des Fahrerlosen Transportfahrzeugs, um die Seite, zu der das Verfahrelement bewegt werden kann, zur Arbeitsstation hin auszureichen, kann somit entfallen. Dies kann die Planung der Verfahrwege des Fahrerlosen Transportfahrzeugs vereinfachen sowie Zeit sparen.

Gemäß einem weiteren Aspekt der Erfindung ist das Gestell ausgebildet, das Förderhilfsmittel in der vertikalen Richtung zumindest im Wesentlichen, vorzugsweise vollständig, auf sich drauf aufzunehmen. Hierdurch kann eine rein horizontale Bewegung des Förderhilfsmittels begünstigt werden, so dass ein Anheben des Förderhilfsmittel vermieden werden kann, was einen zusätzlichen konstruktiven Aufwand sowie an Energie bedeuten könnte. Das Fahrerlose Transportfahrzeug bzw. dessen Gestell kann hierzu zumindest abschnittsweise ausreichend flach in der vertikalen Richtung ausgebildet sein, so dass das Aufnahmen und Abgeben des Förderhilfsmittels wie zuvor beschrieben erfolgen kann.

Dabei kann das Förderhilfsmittel in der vertikalen Richtung zumindest im Wesentlichen auf dem Fahrerlosen Transportfahrzeug bzw. auf dessen Gestell drauf aufgenommen werden, so dass das Fahrerlose Transportfahrzeug auch kleiner in den horizontalen Richtungen dimensioniert sein und das aufgenommene Förderhilfsmittel über die äußeren Maße des Fahrerlosen Transportfahrzeugs bzw. dessen Gestells hinausragen kann. Hierdurch kann das Fahrerlose Transportfahrzeug platzsparender, leichter und bzw. oder energiesparender ausfallen.

Vorzugsweise wird das Förderhilfsmittel jedoch in der vertikalen Richtung vollständig auf dem Fahrerlosen Transportfahrzeug bzw. auf dessen Gestell drauf aufgenommen, was die Stabilität der Bewegung des Fahrerlosen Transportfahrzeugs sowie des Verfahrens des Verfahrelements erhöhen kann. Dies gilt insbesondere dann, wenn das Verfahrelement relativ zur Erstreckung des Fahrerlosen Transportfahrzeugs in dieser Richtung vergleichsweise weit über dessen äußere Maße hinaus ausgefahren werden können soll, da dies zu einem vergleichsweise großen Hebelarm mit entsprechend großem Moment führen kann.

Besonders vorzugsweise kann die Größe des Gestells und vorzugsweise des gesamten Fahrerlosen Transportfahrzeugs in der Horizontalen den Maßen des zu transportierenden Förderhilfsmittels entsprechen. Hierdurch kann ein Kompromiss zwischen den zuvor beschriebenen Eigenschaften erreicht werden.

Gemäß einem weiteren Aspekt der Erfindung ist das Verfahrelement in der vertikalen Richtung auf dem Gestell drauf und unterhalb des aufgenommenen Förderhilfsmittels angeordnet ist. Mit anderen Worten ist das Verfahrelement zwischen dem Gestell und dem aufgenommenen Förderhilfsmittel angeordnet. Auf diese Art und Weise kann das Verfahrelement möglichst platzsparend sowie in unmittelbarer Nähe zu dem Förderhilfsmittel angeordnet werden, um dieses wie zuvor beschrieben verfahren zu können. Gemäß einem weiteren Aspekt der Erfindung ist das Verfahrelement ausgebildet, sich selbststätig mit dem Förderhilfsmittel zu verbinden und sich selbsttätig von dem Förderhilfsmittel zu lösen. Mit anderen Worten kann das Verbinden und Lösen selbststätig durch das Verfahrelement ausgeführt werden, so dass auch diese Funktion des Fahrerlosen Transportfahrzeugs selbsttätig, d.h. ohne zusätzlich Benutzereingriffe, ausgeführt werden kann. Dies kann auch diese Funktion automatisieren.

Gemäß der Erfindung weist das Verfahrelement wenigstens ein Greiferelement auf, welches ausgebildet ist, das Förderhilfsmittel zu greifen. Auf diese Art und Weise kann eine Verbindung des Verfahrelements mit dem Förderhilfsmittel hergestellt werden, damit das Verfahrelement das Förderhilfsmittel wie zuvor beschrieben mit sich mit führen kann. Auch kann diese Verbindung wieder aufgehoben werden, um das Förderhilfsmittel seitens des Verfahrelements wieder freizugeben. Das Greifen und Lösen kann dabei z.B. durch ein Hintergreifen des Förderhilfsmittels an einer Stelle erfolgen, so dass das Förderhilfsmittel von dem Verfahrelement mittels dessen Greiferelements in wenigstens einer Richtung gezogen werden kann. Vorzugsweise erfolgt das Greifen als beidseitiges Umgreifen einer Stelle des Förderhilfsmittels, so dass eine sichere Verbindung geschaffen und bzw. oder das Förderhilfsmittel von dem Verfahrelement mittels dessen Greiferelements in beide Richtungen gezogen werden kann. Dies kann die Möglichkeiten der Bewegungen erhöhen, welche das Förderhilfsmittel mit dem Verfahrelement ausführen kann.

Gemäß der Erfindung weist das Verfahrelement wenigstens ein Antriebselement auf, welches ausgebildet ist, das Greiferelement in der horizontalen Richtung gegenüber dem Verfahrelement wenigstens einseitig, vorzugsweise beidseitig, zu verfahren. Auf diese Art und Weise können zwei Bewegungen miteinander kombiniert werden, um die Wegstrecke zu erhöhen, um die das Förderhilfsmittel gegenüber dem Fahrerlosen Transportfahrzeug sowie gegenüber der Arbeitsstation bewegt werden kann. Die Bewegung des Greiferelements gegenüber dem Verfahrelement in der horizontalen Richtung kann wie zuvor für das Verfahrelement beschrieben z.B. mittels eines elektrischen Linearantriebs oder mittels eines Antriebsriemens und dergleichen erfolgen, wie weiter unten noch näher beschrieben werden wird.

Wie zuvor beschrieben kann das Verfahrelement selbst gegenüber dem Gestell des Fahrerlosen Transportfahrzeugs in der horizontalen Richtung über dessen Maße hinaus verfahren werden. Hierdurch kann das Verfahrelement bzw. dessen Greiferelement auch dann z.B. in einen verbindenden Kontakt mit einem Förderhilfsmittel, welches von einer Arbeitsstation aufgenommen ist, gebracht werden, wenn zwischen der entsprechenden Seite des Fahrerlosen Transportfahrzeugs und des Förderhilfsmittels ein Abstand in dieser horizontalen Richtung besteht. Dieser Kontakt kann ausreichen, um das Förderhilfsmittel derart zu dem Fahrerlosen Transportfahrzeug hin zu ziehen und aufzunehmen, so dass das Fahrerlose Transportfahrzeug das Förderhilfsmittel mit sich mit bewegen und somit transportieren kann, wie zuvor beschrieben.

Gemäß dem vorliegenden Aspekt der Erfindung kann das Aufnehmen des Förderhilfsmittels jedoch dadurch verbessert werden, indem das Greiferelement gegenüber dem Verfahrelement selbst in derselben horizontalen Richtung beweglich ist wie das Verfahrelement gegenüber dem Gestell des Fahrerlosen Transportfahrzeugs. Hierdurch kann das Förderhilfsmittel von dem Greiferelement, welches gegenüber dem Verfahrelement von der Arbeitsstation weg und somit zum Fahrerlosen Transportfahrzeug hin bewegt werden kann, zum Verfahrelement hin gezogen werden, so dass das Förderhilfsmittel von dem Verfahrelement zumindest teilweise bis vollständig aufgenommen werden kann. Ist diese Bewegung abgeschlossen, so kann das Verfahrelement wie zuvor beschrieben zum Fahrerlosen Transportfahrzeug hin bewegt werden, um das Förderhilfsmittel seitens des Fahrerlosen Transportfahrzeugs aufzunehmen. Die Bewegung des Verfahrelements gegenüber dem Gestell des Fahrerlosen Transportfahrzeugs kann hierdurch kürzer als ohne die Verwendung des beweglichen Greiferelements ausfallen, da eine gewissen Strecke der Gesamtbewegung des Förderhilfsmittels nun von dem Greiferelement übernommen werden kann. Dies kann die Umsetzung der Beweglichkeit des Verfahrelements vereinfachen. Auch kann das Verfahrelement hierdurch eine größere Stabilität erhalten bzw. dieselbe Stabilität mit geringerem Aufwand erreicht werden, da der Hebelarm verkürzt werden kann, welcher durch das Verfahrelement gebildet werden kann.

Dabei die Beweglichkeit des Greiferelements beidseitig in der horizontalen Richtung vorzusehen kann dahingehend vorteilhaft sein, dass analog zur zuvor beschriebenen Bewegung zur Aufnahme eines Förderhilfsmittels in der entgegengesetzten Richtung eine Abgabe eines aufgenommenen Förderhilfsmittels erfolgen kann. Dies kann die Flexibilität und die Möglichkeiten der Nutzung des erfindungsgemäßen Fahrerlosen Transportfahrzeugs erhöhen.

Gemäß einem weiteren Aspekt der Erfindung ist das Antriebselement ein endlos geschlossenes Antriebselement, welches im Wesentlichen in der horizontalen Richtung um wenigstens einen Antrieb und um wenigstens ein Umlenkelement geführt wird. Dies kann eine besonders einfache, robuste, energieeffiziente, bauraumsparende und bzw. oder kostengünstige Möglichkeit sein, die gewünschte Beweglichkeit umzusetzen. Insbesondere kann die zuvor beschriebene Bewegung zu beiden Seiten hin auf diese Art und Weise mit den zuvor genannten Vorteilen umgesetzt werden.

Gemäß einem weiteren Aspekt der Erfindung ist das endlos geschlossene Antriebselement ein Antriebsriemen, eine Antriebskette oder ein Antriebsband ist. Dies kann die Umsetzung der zuvor beschriebenen Aspekte mit einfachen, robusten und bzw. oder kostengünstigen Mittels ermöglichen.

Gemäß einem weiteren Aspekt der Erfindung weist das Greiferelement zwei Greiferhalbelemente auf, welche an dem endlos geschlossenen Antriebselement angeordnet sind, um durch das Umlenken des endlos geschlossenen Antriebselements an dem Antrieb und bzw. oder an dem Umlenkelement geöffnet und durch das Verfahren zwischen dem Antrieb und dem Umlenkelement geschlossen zu werden. Mit anderen Worten sind die beiden Greiferhalbelemente, welche gemeinsam das Greiferelement bilden, ausgebildet und derart unmittelbar beieinander an dem endlos geschlossenen Antriebselement auf dessen nach außen gerichteter Seite angeordnet, so dass die beiden Greiferelemente bei einer geradlinigen translatorischen Bewegung in der horizontalen Richtung gemeinsam eine Aussparung umschließen, von welcher ein Teil eines Förderhilfsmittels wie z.B. ein vertikal ausgerichtetes Griffelement eines Gestells des Förderhilfsmittels aufgenommen und somit von dem Greiferelement des Verfahrelements gegriffen werden kann. Hierdurch kann das Förderhilfsmittel von dem Greiferelement bzw. von dem Verfahrelement mit sich mit bewegt werden.

Hierdurch ist es jedoch auch möglich, das Greiferelement einfach zu öffnen. Wird nämlich das Greiferelement über eine Umlenkung geführt, welche durch ein Umlenkelement wie z.B. eine Umlenkrolle oder durch einen Antrieb wie z.B. eine Antriebsrolle realisiert sein kann, so wird das Antriebselement wie z.B. ein endlos geschlossener Antriebsriemen um das Umlenkelement herum gebogen. Diese Bewegung überträgt sich auf die beiden nach außen gerichteten Greiferhalbelemente, welche hierdurch auseinander gebogen werden, was zu einem Öffnen des Greiferelements führen kann. Wird nun das Antriebselement an dieser Stelle angehalten, so kann ein geöffnetes Greiferelement ein korrespondierendes Griffelement des Förderhilfsmittels aufnehmen bzw. freigeben. Dies kann es ermöglichen, die Funktion des Öffnens und des Schließens des Greiferelements ohne zusätzliche Mittel und alleinig durch die Bewegung des Antriebselements zu realisieren.

Gemäß einem weiteren Aspekt der Erfindung ist das Greiferelement ausgebildet, durch das Antriebselement seitlich gegenüber dem Verfahrelement verfahren zu werden. Mit anderen Worten kann das Greiferelement mittels des Antriebselements seitlich an dem Verfahrelement entlang verfahren werden. Dies kann das Greiferelement vor äußeren Einflüssen und insbesondere vor Kollisionen schützen, da das Greiferelement und das Antriebselement in der vertikalen Richtung von z.B. einer Abdeckung des Verfahrelements überragt und hierdurch geschützt werden können. Auch kann das seitliche Verfahren des Greiferelements die Verwendung eines endlos geschlossenen Antriebselements wie zuvor beschrieben begünstigen, da deren endlos geschlossener Verlauf in der Horizontalen konstruktiv einfacher umgesetzt werden kann als bei einer Anordnung senkrecht zur Horizontalen.

Gemäß einem weiteren Aspekt der Erfindung weist das Verfahrelement wenigstens ein Paar von Greiferelementen auf, welche ausgebildet sind, das Förderhilfsmittel gemeinsam zu greifen, wobei die beiden Greiferelemente senkrecht zu der horizontalen Richtung des Ausfahrens bzw. Einfahrens zueinander beabstandet angeordnet sind. Mit anderen Worten können sich die beiden Greiferelemente parallel zueinander in der horizontalen Richtung bewegen. Hierdurch können die Eigenschaften des zuvor beschriebenen Greiferelements doppelt genutzt werden, was die Stabilität der Verbindung zwischen dem Verfahrelement und dem Förderhilfsmittel erhöhen kann. Insbesondere kann durch den Versatz der beiden Greiferelemente senkrecht zur Bewegungsrichtung ein Verkippen bei der Bewegung vermieden werden. Auch können zwei Greiferelemente zusammen dieselbe Kraft aufbringen wie ein einziges Greiferelement mit einem leistungsstärker dimensionierten Antrieb, jedoch können hierzu kleinere Komponenten verwendet werden, was den Platzbedarf zur Umsetzung dieser Funktion reduzieren kann. Auch können diese Komponenten platzsparender angeordnet werden als weniger größere Komponenten. Ferner können zur Umsetzung der beiden Greiferelemente Gleichteile verwendet werden, was die Kosten reduzieren kann.

Gemäß einem weiteren Aspekt der Erfindung weist das Verfahrelement wenigstens ein Paar von Greiferelementen auf, welche ausgebildet sind, das Förderhilfsmittel gemeinsam zu greifen, wobei die beiden Greiferelemente in der horizontalen Richtung des Ausfahrens bzw. des Einfahrens zueinander beabstandet angeordnet sind. Auf diese Art und Weise kann das Förderhilfsmittel entlang der horizontalen Bewegungsrichtung zweifach wie zuvor beschrieben gegriffen werden, was die Stabilität des von dem Fahrerlosen Transportfahrzeug aufgenommenen Förderhilfsmittels erhöhen kann. Dies kann der Sicherheit der Bewegung des Fahrerlosen Transportfahrzeugs bzw. dessen Umgebung zugutekommen und ggfs. höhere Geschwindigkeiten des Fahrerlosen Transportfahrzeugs bei der Bewegung erlauben, was zu einer Zeitersparnis führen kann.

Gemäß einem weiteren Aspekt der Erfindung sind die beiden Greiferelemente an einem gemeinsamen Antriebselement soweit zueinander beabstandet angeordnet wie zwei korrespondierende Griffelemente des Förderhilfsmittels in der horizontalen Richtung zueinander beabstandet angeordnet sind. Hierdurch kann es ermöglicht werden, dass ein dem Fahrerlosen Transportfahrzeug zugewandtes Griffelement des Förderhilfsmittels wie zuvor beschrieben von einem geöffneten Greifelement des Verfahrelements des Fahrerlosen Transportfahrzeugs gegriffen werden und dann mit sich so weit mitbewegt werden kann, bis ein weiteres Griffelemente des Förderhilfsmittels auf die gleiche Art und Weise von einem weiteren geöffneten Greifelement des Verfahrelements des Fahrerlosen Transportfahrzeugs gegriffen werden kann. Hierdurch kann auf einfache Art und Weise sichergestellt werden, dass das Förderhilfsmittel entlang der horizontalen Bewegungsrichtung zweifach gegriffen werden kann. Die Anordnung der beiden Greiferelemente des Verfahrelements kann zumindest für eine bestimmte Art von Förderhilfsmitteln fest vorgesehen werden, da Förderhilfsmittel üblicherweise genormte Maße aufweisen.

Zumindest eines der beiden Greiferelemente kann an unterschiedlichen Positionen des Verfahrelements angeordnet werden, um die zuvor beschriebenen Eigenschaften und Vorteile bei Förderhilfsmitteln unterschiedlicher Erstreckung in der Querrichtung wie zuvor beschrieben anwenden zu können. Mit anderen Worten kann der Abstand zwischen den beiden Greiferelemente variiert und dem Abstand der Griffelemente des Förderhilfsmittels in der Querrichtung angepasst werden, um unterschiedlich breite Förderhilfsmittel wie zuvor beschrieben handhaben zu können. Auch können mehr als zwei Greiferelemente an dem gemeinsamen Antriebselement angeordnet sein, welche unterschiedliche Abstände zueinander aufweisen, welche jeweils unterschiedlichen Abständen der Griffelemente verschiedener Förderhilfsmittel in der Querrichtung entsprechen, so dass mit dem erfindungsgemäßen Fahrerlosen Transportfahrzeug unterschiedliche Förderhilfsmittel wie zuvor beschrieben gehandhabt werden können, ohne ein Greiferelement neu positionieren zu müssen. Dies kann die Flexibilität der Anwendung des erfindungsgemäßen Fahrerlosen Transportfahrzeugs erhöhen.

Gemäß einem weiteren Aspekt der Erfindung weist das Gestell wenigstens eine Rollenbahn, vorzugsweise wenigstens ein Paar von Rollenbahnen, auf, welche ausgebildet ist, das Förderhilfsmittel rollbar aufzunehmen. Hierdurch kann die Beweglichkeit des Förderhilfsmittels gegenüber dem Fahrerlosen Transportfahrzeug gefördert werden, da ein Gestell des Förderhilfsmittels z.B. mittels Füßen, Bügeln oder dergleichen über die Rollen der Rollenbahn gerollt werden kann. Hierdurch kann das Aufnehmen und das Abgeben des Förderhilfsmittels für das Verfahrelement bzw. für das Greiferelement vereinfacht werden. Insbesondere können die beteiligten Antriebe des Verfahrelements und des Greiferelements leistungsschwächer ausgebildet werden, was Bauraum und Anschaffungskosten sparen sowie den Energieverbrauch reduzieren kann.

Dabei sind Rollenbahnen hinsichtlich ihrer Anzahl und ihrer Anordnung senkrecht zur horizontalen Richtung der Bewegung des Ausfahrens bzw. Einfahrens derart vorzusehen, dass das zu transportierende Förderhilfsmittel wie zuvor beschrieben aufgenommen werden kann. Ist die Anordnung der Füße, Bügel oder dergleichen des Förderhilfsmittel bekannt, kann die Rollenbahn bzw. das Paar von Rollenbahnen entsprechend bei dem Fahrerlosen Transportfahrzeug vorgesehen werden. Ist dies nicht bekannt bzw. sollen Förderhilfsmittel mit unterschiedlichen Größen bzw. Anordnungen von Füßen, Bügeln oder dergleichen aufgenommen werden können, kann es vorteilhaft sein, mehrere Rollenbahnen nebeneinander bei dem Fahrerlosen Transportfahrzeug vorzusehen, um das Fahrerlose Transportfahrzeug möglichst flexibel einsetzen zu können. Dies kann die Kosten durch die Verwendung der mehreren Rollenbahnen erhöhen, jedoch zu einem möglichst universell einsetzbaren Fahrerlosen Transportfahrzeug führen.

Mit anderen Worten betrifft die Erfindung einen Greiftisch, welcher auf einem FTF drauf verbaut ist und von der Fahrzeugsteuerung angesteuert werden kann. Das FTF kann Rollenbahnen in der gleichen Ladehöhe wie die Arbeitsstation aufweisen. Der Greiftisch kann in die Staplerösen eines Ladungsträgers eingreifen.

In einem ausfahrbaren Greiftisch können zwei parallel laufende Ketten mit einem Getriebe verbunden sein. Auf der Kette können Greiferelemente verbaut sein. Die Greiferelemente können sich beim Auffahren auf die vordere Umlenkrolle öffnen. Beim seitlichen Verfahren des Greiftisches können die geöffneten Greiferelemente an den Gabelösen des Ladungsträgers positioniert werden. Durch das entgegengesetzte Verfahren der Ketten können sich die Greiferelemente schließen und der Ladungsträger kann in Richtung des FTF auf die Rollenbahnen des FTF bewegt werden. Ist der Ladungsträger auf dem FTF, können zwei weitere auf der Kette montierte Greiferelemente in die hinteren Ösen des Ladungsträgers eingreifen. In der Transportstellung kann der Ladungsträger in vier Greiferelementen gesichert sein und der Greiftisch kann in die Mittelstellung gefahren werden, so dass der Ladungsträger sich zum Transport auf dem FTF innerhalb der Fahrzeugkontur befinden kann.

Diese Funktion kann aus beiden Richtungen ausgeführt werden. Auch die Abgabe des Ladungsträgers auf einen Stellplatz einer Arbeitsstation kann in beide Richtungen erfolgen. Ferner kann ein Ladungsträger z.B. auf der rechten Seite des FTF aufgenommen und auf der linken Seite des FTF abgegeben werden, und umgekehrt.

Mit der erfindungsgemäßen Lösung kann ein FTF einen Ladungsträger auch von einer nicht angetriebenen Rollenbahn einer Arbeitsstation abnehmen oder den Ladungsträger auf eine nicht angetriebene Rollenbahn einer Arbeitsstation aufschieben. Die Aufnahme und die Abgabe des Ladungsträgers kann in beide Richtungen vom FTF durchgeführt werden. Das Anliefern und Abholen von Ladungsträgern bedarf keiner Automatisierung der Arbeitsstation.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Fahrerlosen Transportfahrzeugs;
- Fig. 2: eine schematische Draufsicht auf das erfindungsgemäße Fahrerlose Transportfahrzeug seitlich neben einer Arbeitsstation mit ausgefahrenem Verfahrelement und geöffneten Greiferelementen für einen vorderen Eingriff;
- Fig. 3: eine perspektivische schematische Detailansicht eines geöffneten Greiferelements des erfindungsgemäßen Fahrerlosen Transportfahrzeugs;
- Fig. 4: eine perspektivische schematische Darstellung des erfindungsgemäßen Fahrerlosen Transportfahrzeugs mit geöffneten Greiferelementen im vorderen Eingriff;
- Fig. 5: eine perspektivische schematische Detailansicht eines geschlossenen Greiferelements des erfindungsgemäßen Fahrerlosen Transportfahrzeugs;
- Fig. 6: eine perspektivische schematische Darstellung des erfindungsgemäßen Fahrerlosen Transportfahrzeugs mit sich bewegenden Greiferelementen;
- Fig. 7: eine perspektivische schematische Darstellung des erfindungsgemäßen Fahrerlosen Transportfahrzeugs mit aufgenommenem Förderhilfsmittel;
- Fig. 8: eine perspektivische schematische Darstellung des erfindungsgemäßen Fahrerlosen Transportfahrzeugs mit eingefahrenem Verfahrelement; und
- Fig. 9: eine perspektivische schematische Darstellung des erfindungsgemäßen Fahrerlosen Transportfahrzeugs beim Entfernen von der Arbeitsstation.

Die o.g. Figuren werden in kartesischen Koordinaten betrachtet. Es erstreckt sich eine Längsrichtung X, welche auch als Tiefe X oder Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

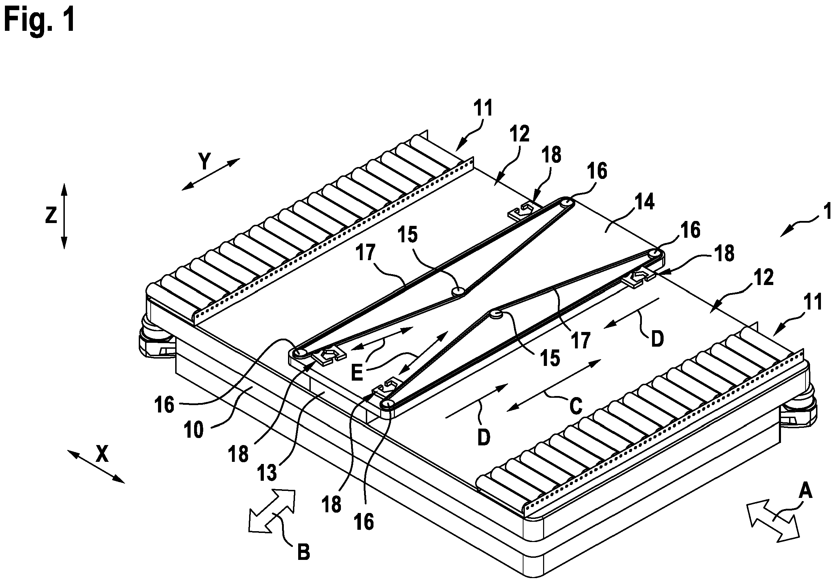

Fig. 1 zeigt eine perspektivische schematische Darstellung eines erfindungsgemäßen Fahrerlosen Transportfahrzeugs 1, welches kurz als FTF 1 bezeichnet werden kann. Das FTF 1 weist ein Gestell 10 auf, welches auch als Rahmen 10 bezeichnet werden kann. Das Gestell 10 ist im Wesentlichen rechteckig und deutlich flacher in der vertikalen Richtung Z als breit in der Querrichtung Y sowie lang in der Längsrichtung X ausgebildet. An zwei einander gegenüberliegenden Ecken des Gestells 10 ist jeweils ein Laserscanner angeordnet (dargestellt, nicht bezeichnet), welcher der optischen Erfassung der Umgebung dient.

Innerhalb bzw. unterhalb des Gestells 10 sind neben einer Steuerungseinheit (nicht dargestellt) sowie elektrischen Energieversorgung (nicht dargestellt) auch mehrere omnidirektionale Antriebe (nicht dargestellt) vorgesehen, welche das FTF 1 in der Horizontalen auf einem Untergrund (nicht dargestellt) in alle Richtungen bewegen können. Hierdurch kann das FTF 1 in einer Fahrtrichtung A vor und zurück bewegt werden, welche als die bevorzugte Bewegungsrichtung angesehen werden kann und der Längsrichtung X entspricht. Ferner kann das FTF 1 in einer Positionierrichtung B, welche der Querrichtung Y entspricht, in beide Richtungen verfahren werden.

Auf dem Gestell 10 sind in der vertikalen Richtung Z oben drauf zwei Rollenbahnen 11 angeordnet, welche parallel zueinander verlaufen, sich in der Querrichtung Y jeweils über die gesamte Breite des Gestells 10 erstrecken und in der Längsrichtung X jeweils randseitig angeordnet sind. In der Längsrichtung X mittig ist ein Verfahrelement 14 angeordnet, welches sich ebenfalls in der Querrichtung Y erstreckt und weiter unten näher erläutert werden wird. In der Längsrichtung X zwischen den Rollenbahnen 11 und dem Verfahrelement 14 weist die Oberseite des Gestells 10 jeweils eine Aufnahme 12 auf, welche durch einen Freiraum gebildet wird. Stattdessen können in diesem Bereich auch weitere Rollenbahnen 11 angeordnet sein.

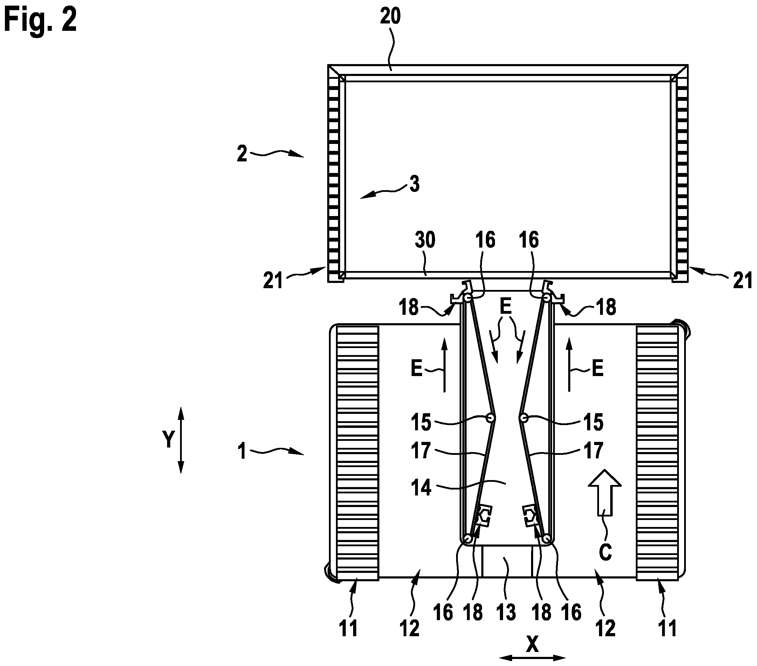

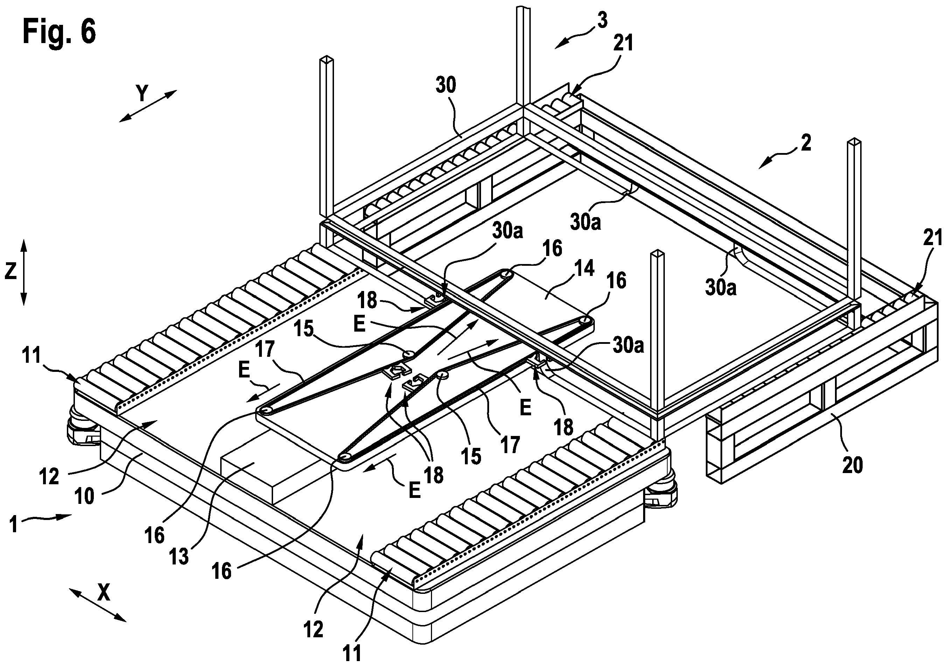

Das zuvor bereits erwähnte Verfahrelement 14 ist mittels Schienen (nicht dargestellt) mit einer Verfahrelementführung 13 in der Querrichtung Y beweglich verbunden. Die Verfahrelementführung 13 selbst ist feststehend auf der Oberseite des Gestells 10 angeordnet und erstreckt sich dabei in der Querrichtung Y bis zu der jeweiligen äußeren Kante des Gestells 10. Gegenüber der Verfahrelementführung 13 kann das Verfahrelement 14 in der Querrichtung Y mittels eines elektrischen Antriebs (nicht dargestellt) zu beiden Seiten hin verfahren werden, so dass das Verfahrelement 14 in der Querrichtung Y über die jeweilige äußere seitliche Kante des Gestells 10 als dessen äußere Maße hinausragen kann, vgl. z.B. Figur 2, 4, 6 und 7. Auf diese Art und Weise kann das Verfahrelement 14 in der Querrichtung Y zu beiden Seiten gegenüber dem Gestell 10 ausgefahren sowie eingefahren werden.

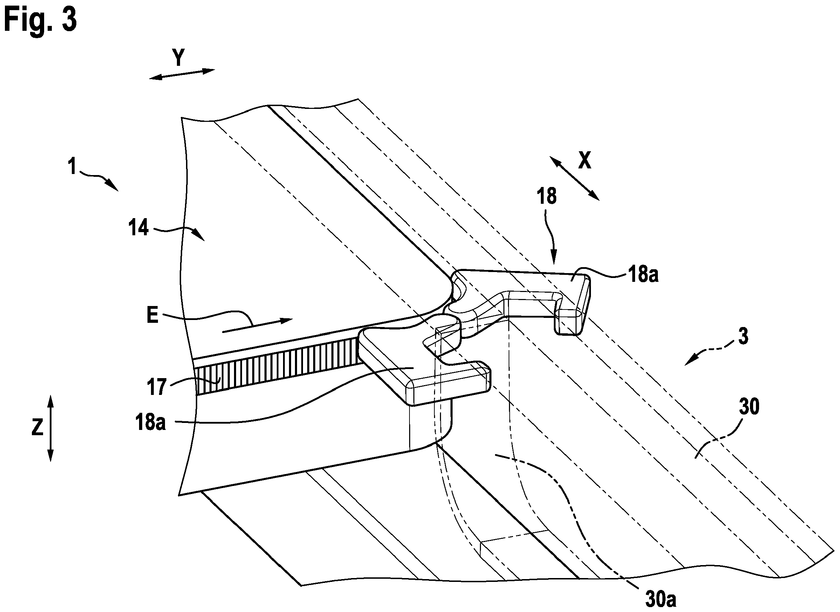

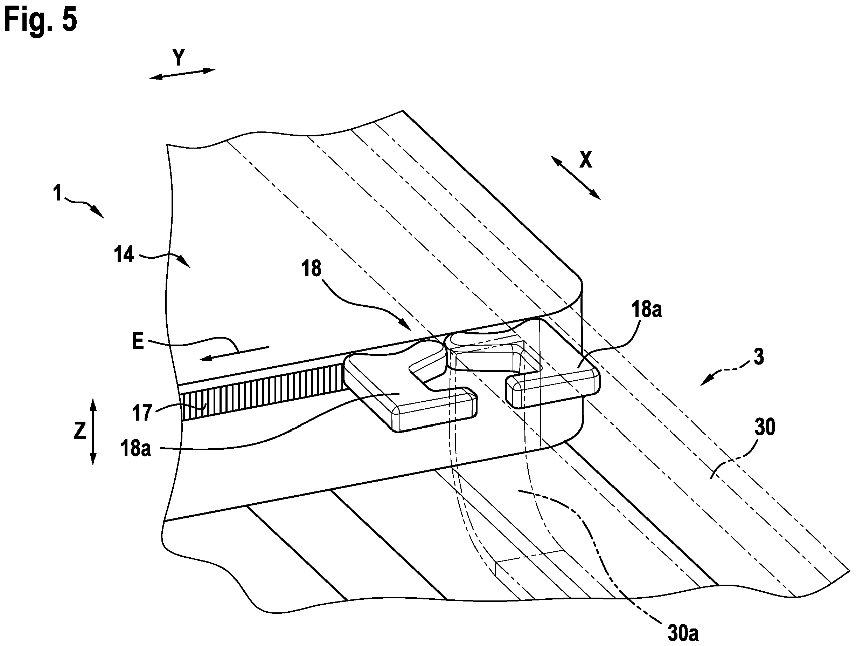

Das Verfahrelement 14 weist mehrere Greiferelemente 18 auf, welche jeweils zwei Greiferhalbelemente 18a aufweisen. Das Verfahrelement 14 kann daher auch als Greiferschlitten 14 oder als Greifertisch 14 bezeichnet werden, die Verfahrelementführung 13 auch als Greiferführung 13. Die Greiferhalbelemente 18a sind jeweils im Wesentlichen halbbogenförmig ausgebildet und weisen jeweils eine Aussparung auf, welche zueinander hin ausgerichtet sind. Die beiden Aussparungen der Greiferhalbelemente 18a bilden zusammen eine Aussparung des Greiferelements 18, siehe z.B. Figuren 3 und 5. Die beiden jeweiligen Greiferhalbelemente 18a können gegenüber einander aufgeklappt und hierdurch das Greiferelement 18 geöffnet werden, vgl. z.B. Figuren 2 bis 4. Durch Zuklappen der beiden Greiferelemente 18a kann das Greiferelement 18 geschlossen werden, vgl. z.B. Figuren 1 und 5 bis 9.

Die Greiferelemente 18 sind jeweils paarweise an einem endlos geschlossenen Antriebselement 17 angeordnet, welches ein Antriebsriemen 17, eine Antriebskette 17 oder ein Antriebsband 17 sein kann. In dem betrachteten Ausführungsbeispiel können zwei Antriebsketten 17 verwendet werden, welche parallel zueinander im Wesentlichen in der Querrichtung Y über die gesamte Erstreckung des Verfahrelements 14 verlaufen. Die Antriebsketten 17 werden jeweils um zwei Umlenkelemente 16 in Form von Umlenkrollen 16 geführt, welche zum Eingriff in die Kettenelemente der Antriebsketten 17 jeweils mit Zähnen oder dergleichen versehen sind. Beide Antriebsketten 17 können jeweils mittels eines Antriebs 15 in Form einer Antriebsrolle 15 angetrieben werden, welche ebenfalls mit Zähnen oder dergleichen versehen sind. Die Antriebsrollen 15 sind in der Querrichtung Y etwa mittig und in der Längsrichtung X vom seitlichen Rand des Verfahrelements 14 zurückversetzt angeordnet, so dass die beiden Antriebsketten 17 einen leicht dreieckigen Verlauf aufweisen. Die beiden Antriebsrollen 15 können über ein gemeinsames Getriebe (nicht dargestellt) mittels eines gemeinsamen elektrischen Antriebs (nicht dargestellt) synchron angetrieben werden, so dass die Greiferelemente 18 der beiden Antriebsketten 17 in die gleiche Bewegungsrichtung E bewegt und identisch positioniert werden können.

Die insgesamt vier Umlenkrollen 16 sind an den vier Ecken des Verfahrelements 14 angeordnet, so dass die beiden Antriebsketten 17 in der Querrichtung Y über die nahezu gesamte Erstreckung des Verfahrelements 14 in der Querrichtung Y am Rand entlang verlaufen. Die vier Umlenkrollen 16 sowie die beiden Antriebsrollen 15 sind jeweils in der vertikalen Richtung Z ausgerichtet, d.h. die Drehachsen der Umlenkrollen 16 und Antriebsrollen 15 fällt mit der vertikalen Richtung Z zusammen. In der vertikalen Richtung Z von oben werden die Umlenkrollen 16, die Antriebsrollen 15 und die Antriebsketten 17 durch eine Abdeckung (nicht dargestellt) abgedeckt, welche feststehend mit dem Verfahrelement 14 verbunden ist. Hierdurch können diese Elemente 15-17 vor Verschmutzung, Beschädigung etc. geschützt werden. Ebenso können Personen vor diesen beweglichen Elementen 15-17 geschützt werden.

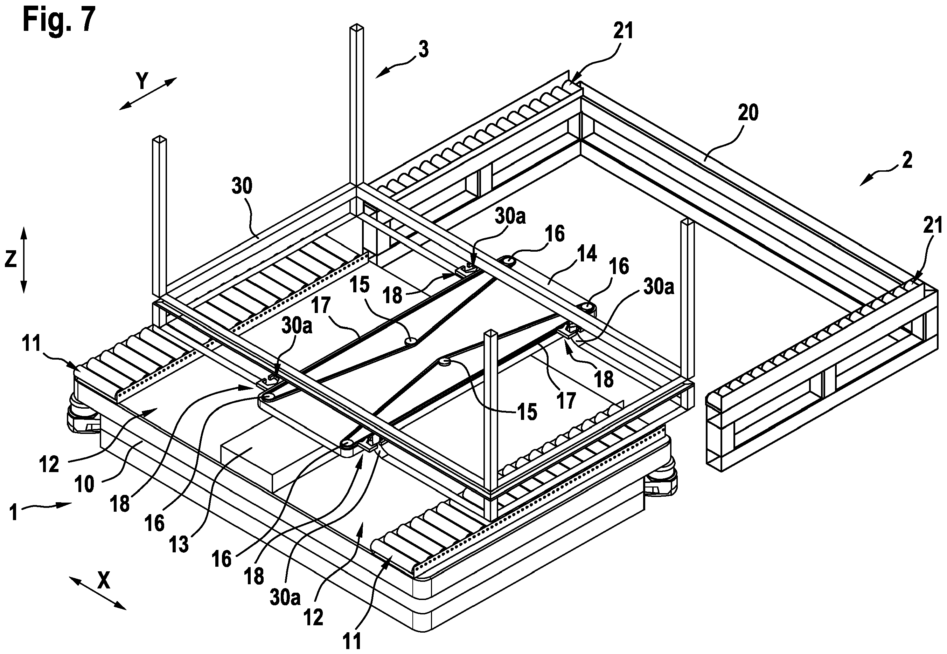

Die Greiferelemente 18 können somit, je nach ihrer Positionierung durch die Bewegung der jeweiligen Antriebskette 17, innerhalb der äußeren Maße des Verfahrelements 14 und somit unterhalb der Abdeckung oder außerhalb der äußeren Maße des Verfahrelements 14 und somit über die äußeren Maße des Verfahrelements 14 teilweise bis vollständig hervorragend, siehe z.B. Figuren 7 bis 9, positioniert werden. Bei entsprechender Positionierung kann auch ein Greiferelement 18 jeder Antriebskette 17 innerhalb und das andere Greiferelement 18 außerhalb der äußeren Maße des Verfahrelements 14 angeordnet sein, siehe z.B. Figuren 1 bis 6.

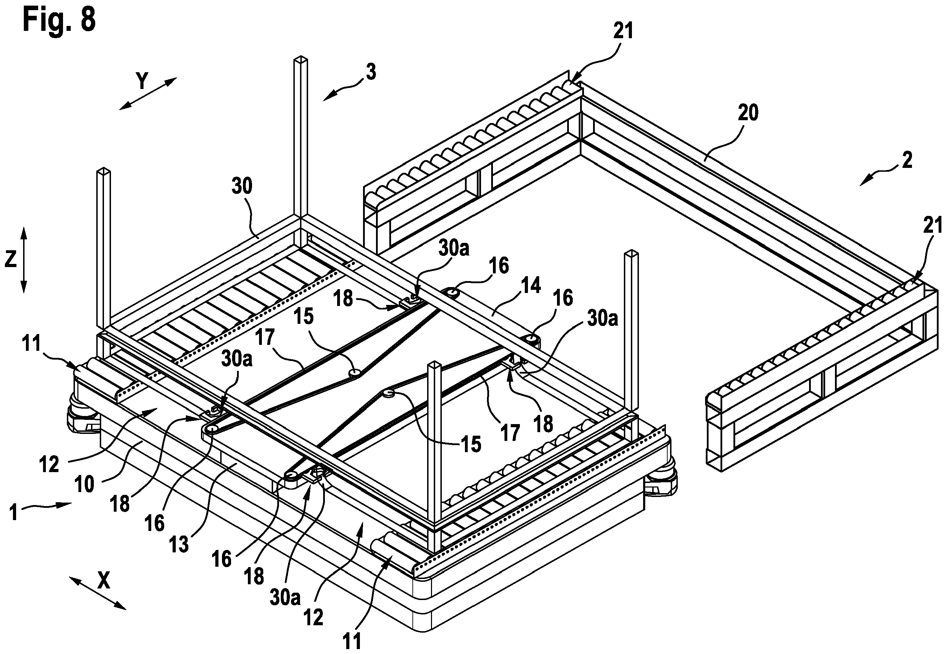

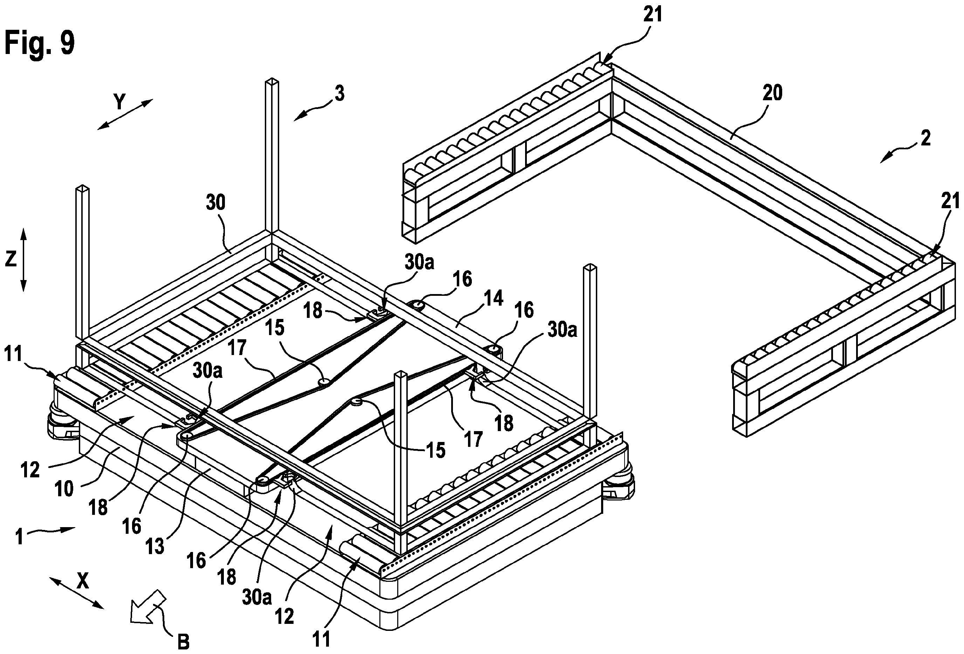

Mittels jeweils eines Greiferelements 18 jeder Antriebskette 17 kann ein an einer Arbeitsstation 2 befindliches Förderhilfsmittel 3, welches auch als Ladehilfsmittel 3 oder als Ladungsträger 3 bezeichnet werden kann, gegriffen und durch eine Bewegung des Greiferelements 18 in eine Bewegungsrichtung E in der vertikalen Richtung Z über das Verfahrelement 14 drüber gezogen werden. Beim Abschluss dieser Bewegung kann das jeweils andere Greiferelement 18 ebenfalls den Ladungsträger 3 greifen und hierdurch den Halt des Ladungsträgers 3 verbessern. Ist der Ladungsträger 3 vollständig auf dem Verfahrelement 14 aufgenommen, so kann das Verfahrelement 14 mit einer Bewegung in einer Einfahrrichtung D vollständig über das Gestell 10 eingefahren werden, um den Ladungsträger 3 innerhalb der äußeren Maße des Gestells 10 aufzunehmen und zu transportieren, siehe z.B. Figuren 8 und 9. Dabei können alle Bewegungen des Ladungsträgers 3 gegenüber dem Gestell 10 durch dessen Rollenbahnen 11 unterstützt werden, sobald der Ladungsträger 3 mit seinem Gestell 30 bzw. Rahmen 30 mit der äußersten ihm zugewandten Rolle der Rollenbahnen 11 in Kontakt kommt.

Auf diese Art und Weise kann ein Ladungsträger 3 von dem erfindungsgemäßen FTF 1 zu einer Arbeitsstation 2 hin transportiert und selbsttätig an diese Arbeitsstation 2 übergeben werden, indem die zuvor beschriebenen Schritte in umgekehrter Reihenfolge ausgeführt werden. Auch kann ein Ladungsträger 3 wie zuvor beschrieben mittels eines erfindungsgemäßen FTF 1 von einer Arbeitsstation 2 abgeholt werden. Die Ladungsträger 3 können jeweils leer sein oder Teile aufweisen, je nach Anwendungsfall.

In jedem Fall ist erfindungsgemäß ein aktives Mitwirken der Arbeitsstation 2 hierzu nicht erforderlich, so dass entsprechende aktive Mittel wie Antriebe, Greifer und dergleichen seitens der Arbeitsstation 2 nicht benötigt werden und eingespart werden können. Insbesondere muss eine Arbeitsstation 2, welche bisher von einer Person mit Ladungsträgern 3 versorgt wurde, nicht verändert werden, um diese Aufgabe einem erfindungsgemäßen FTF 1 zu übergeben. Lediglich passive Mittel wie Rollenbahnen 21 können seitens der Arbeitsstation 2 hilfreich sein; diese können jedoch auch bei einer manuellen Versorgung der Arbeitsstation 2 mit Ladungsträgern 3 verwendet werden und somit bereits vorhanden sein.

Als Verfahren kann somit ein erfindungsgemäßes FTF 1 in einer Fahrtrichtung A, welche aufgrund der omnidirektionalen Antriebe in der Längsrichtung X sowohl vor als auch zurück gerichtet sein kann, selbsttätig zu einer Arbeitsstation 2 hinfahren und parallel zu dessen Rollenbahnen 21 ausgerichtet zum Halt kommen. Dann kann das FTF 1 in einer der beiden Positionierrichtungen B in der Querrichtung Y an die Arbeitsstation 2 heranfahren, so dass der Abstand ausreichend verringert werden kann, um ein erfindungsgemäßen Greifen und Übernehmen eines von der Arbeitsstation 2 aufgenommenen Ladungsträgers 3 durchführen zu können, vgl. z.B. Figuren 1 und 2.

In dieser Position des FTF 1 wird nun das Verfahrelement 14 in der Querrichtung Y in einer Ausfahrrichtung C zum Ladungsträger 3 hin ausgefahren. Dabei sind die beiden Antriebsketten 17 zuvor derart angetrieben und in einer der beiden Bewegungsrichtungen E positioniert worden, dass jeweils ein Greiferelement 18 derart an der jeweils der Arbeitsstation 2 zugewandten Umlenkrolle 16 positioniert ist, so dass ein Greiferhalbelement 18a ausreichend in der Längsrichtung X von dem dazugehörenden weiteren Greiferhalbelement 18a weggeklappt ist, um das Greiferelement 18 zu öffnen, siehe z.B. Figuren 2 und 3.

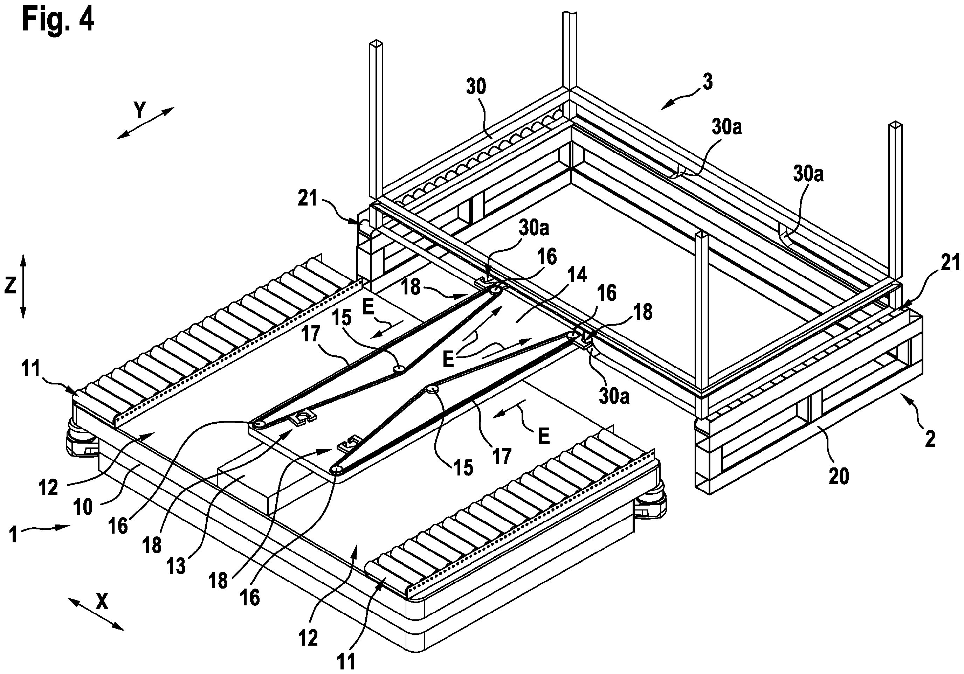

Wird nun das Verfahrelement 14 mit den beiden der Arbeitsstation 2 zugewandten geöffneten Greiferelementen 18 in der Ausfahrrichtung C der Querrichtung Y weiter zur Arbeitsstation 2 ausgefahren, siehe z.B. Figur 2, so gelangen zwei Griffelemente 30a des Gestells 30 des Ladungsträgers 3 in die jeweilige Aussparung, welche von zwei geöffneten Greiferhalbelementen 18a jeweils gebildet wird, siehe Figuren 3 und 4.

Nun können die beiden Antriebsketten 17 in der Bewegungsrichtung E derart verfahren werden, dass sich jeweils das zuvor beschriebene Greiferelement 18 außen seitlich an dem Verfahrelement 14 entlang zum FTF 1 hin bewegt. Hierdurch wird das jeweilige Griffelement 30a des Ladungsträgers 3, welches auch als Vertikalteil 30a des Gestells 30 oder als Abstützelement 30a des Gestells 30 bezeichnet werden kann, jeweils von einem Greiferhalbelement 18a von hinten erfasst und durch dessen Bewegung zum Gestell 10 hin bewegt. Dabei schließt sich das jeweilige Greiferelement 18, sobald das Greiferelement 18 über die Umlenkrolle 16 hinaus bewegt wurde, wodurch das jeweilige Griffelement 30a des Ladungsträgers 3 beidseitig von den Greiferhalbelementen 18a eines Greiferelements 18 umschlossen wird, siehe z.B. Figur 5. Die Bewegung des Ladungsträgers 3 wird dabei von den Rollenbahnen 21 des Gestells 20 bzw. Rahmens 20 der Arbeitsstation 2 passiv unterstützt.

In dieser Konstellation wird im Laufe der Bewegung der beiden Antriebsketten 17 in der Bewegungsrichtung E der Ladungsträger 3 zum FTF 1 hin gezogen und kommt, sobald der Abstand in der Querrichtung Y zwischen FTF 1 und Arbeitsstation 2 überwunden ist, mit seinem Gestell 10 auch mit den Rollenbahnen 11 des FTF 1 in Kontakt, welche von nun an die weitere Bewegung des Ladungsträgers 3 zum FTF 1 hin bzw. auf das FTF 1 drauf passiv unterstützen können.

Die Bewegung der beiden Antriebsketten 17 in der Bewegungsrichtung E der Ladungsträger 3 zum FTF 1 hin wird solange fortgesetzt, bis auch das jeweils weitere Greiferelement 18 mit dem jeweils weiteren Griffelement 30a des Ladungsträgers 3 in Eingriff gekommen ist. In diesem Zustand ist der Ladungsträger 3 vollständig auf dem Verfahrelement 14 drauf aufgenommen und wird etwa an den vier Ecken des Verfahrelements 14 gehalten, siehe Figur 7. Dann wird das Verfahrelement 14 in der Einfahrrichtung D zum FTF 1 hin eingefahren, so dass sich das Verfahrelement 14 samt aufgenommenem Ladungsträger 3 innerhalb der äußeren Maße des FTFs 1 bzw. dessen Gestells 10 befindet, siehe z.B. Figuren 7 und 8.

Das selbststätig beladene FTF 1 kann nun in der entgegengesetzten Positionierrichtung B in der Querrichtung Y von der Arbeitsstation 2 weggefahren werden, um von dieser frei zu kommen, siehe Figur 9. Anschließend kann sich das FTF 1 in einer der beiden Fahrtrichtungen A von der Arbeitsstation 2 entfernen, um den Ladungsträger 3 zu einem Bestimmungsort zu transportieren. Dort kann der aufgenommene Ladungsträger 3 analog der zuvor beschriebenen Art und Weise selbststätig wieder abgegeben werden. Dies kann in der Querrichtung Y zu beiden Seiten erfolgen.

### BEZUGSZEICHENLISTE (Teil der Beschreibung)

- A: Fahrtrichtungen des Fahrerlosen Transportfahrzeugs 1
- B: Positionierrichtungen des Fahrerlosen Transportfahrzeugs 1
- C: Ausfahrrichtung des Verfahrelements 14
- D: Einfahrrichtung des Verfahrelements 14
- E: Bewegungsrichtungen der Antriebsriemen 17 bzw. Greiferelemente 18
- X: Längsrichtung; Tiefe; Länge
- Y: Querrichtung, Breite
- Z: vertikale Richtung; Höhe
- 1: Fahrerloses Transportfahrzeug; FTF
- 10: Gestell; Rahmen
- 11: Rollenbahnen
- 12: Aufnahmen
- 13: Verfahrelementführung; Greiferführung
- 14: Verfahrelement; Greiferschlitten; Greifertisch
- 15: Antriebe; Antriebsrollen
- 16: Umlenkelemente; Umlenkrollen
- 17: (endlos geschlossenes) Antriebselemente; Antriebsriemen; Antriebsketten; Antriebsbänder
- 18: Greiferelement
- 18a: Greiferhalbelemente
- 2: Arbeitsstation
- 20: Gestell; Rahmen
- 21: Rollenbahnen
- 3: Förderhilfsmittel; Ladehilfsmittel; Ladungsträger
- 30: Gestell; Rahmen
- 30a: Griffelement, Vertikalteil bzw. Abstützelement des Gestells 30

## Patentansprüche

1. Fahrerloses Transportfahrzeug (1) mit einem Gestell (10), welches ausgebildet ist, ein Förderhilfsmittel (3) aufzunehmen, und wenigstens einem Verfahrelement (14), welches ausgebildet ist, in wenigstens einer horizontalen Richtung (Y) gegenüber dem Gestell (10) wenigstens einseitig über dessen äußere Maße hinaus ausgefahren sowie eingefahren zu werden, wobei das Verfahrelement (14) ferner ausgebildet ist, das Förderhilfsmittel (3) mit sich mit zu führen, **dadurch gekennzeichnet, dass** das Verfahrelement (14) wenigstens ein Greiferelement (18) aufweist, welches ausgebildet ist, das Förderhilfsmittel (3) zu greifen, wobei das Verfahrelement (14) wenigstens ein Antriebselement (17) aufweist, welches ausgebildet ist, das Greiferelement (18) in der horizontalen Richtung (Y) gegenüber dem Verfahrelement (14) wenigstens einseitig zu verfahren.

2. Fahrerloses Transportfahrzeug (1) nach Anspruch 1, **dadurch gekennzeichnet, dass** das Verfahrelement (14) ausgebildet ist, in wenigstens einer horizontalen Richtung (Y) gegenüber dem Gestell (10) beidseitig über dessen äußere Maße hinaus ausgefahren sowie eingefahren zu werden.

3. Fahrerloses Transportfahrzeug (1) nach Anspruch 1 oder 2, **dadurch gekennzeichnet, dass**
das Gestell (10) ausgebildet ist, das Förderhilfsmittel (3) in der vertikalen Richtung (Z) zumindest im Wesentlichen, vorzugsweise vollständig, auf sich drauf aufzunehmen.

4. Fahrerloses Transportfahrzeug (1) nach einem der vorangehenden Ansprüche, **dadurch gekennzeichnet, dass**
das Verfahrelement (14) in der vertikalen Richtung (Z) auf dem Gestell (10) drauf und unterhalb des aufgenommenen Förderhilfsmittels (3) angeordnet ist.

5. Fahrerloses Transportfahrzeug (1) nach einem der vorangehenden Ansprüche, **dadurch gekennzeichnet, dass**
das Verfahrelement (14) ausgebildet ist, sich selbststätig mit dem Förderhilfsmittel (3) zu verbinden und sich selbsttätig von dem Förderhilfsmittel (3) zu lösen.

6. Fahrerloses Transportfahrzeug (1) nach einem der vorangehenden Ansprüche, **dadurch gekennzeichnet, dass**
das Antriebselement (17) ausgebildet ist, das Greiferelement (18) in der horizontalen Richtung (Y) gegenüber dem Verfahrelement (14) beidseitig zu verfahren.

7. Fahrerloses Transportfahrzeug (1) nach einem der vorangehenden Ansprüche, **dadurch gekennzeichnet, dass**
das Antriebselement (17) ein endlos geschlossenes Antriebselement (17) ist, welches im Wesentlichen in der horizontalen Richtung (Y) um wenigstens einen Antrieb (15) und um wenigstens ein Umlenkelement (16) geführt wird.

8. Fahrerloses Transportfahrzeug (1) nach Anspruch 7, **dadurch gekennzeichnet, dass** das endlos geschlossene Antriebselement (17) ein Antriebsriemen (17), eine Antriebskette (17) oder ein Antriebsband (17) ist.

9. Fahrerloses Transportfahrzeug (1) nach einem der Ansprüche 7 oder 8, **dadurch gekennzeichnet, dass**
das Greiferelement (18) zwei Greiferhalbelemente (18a) aufweist, welche an dem endlos geschlossenen Antriebselement (17) angeordnet sind, um durch das Umlenken des endlos geschlossenen Antriebselements (17) an dem Antrieb (15) und/oder an dem Umlenkelement (16) geöffnet und durch das Verfahren zwischen dem Antrieb (15) und dem Umlenkelement (16) geschlossen zu werden.

10. Fahrerloses Transportfahrzeug (1) nach einem der vorangehenden Ansprüche, **dadurch gekennzeichnet, dass** das Greiferelement (18) ausgebildet ist, durch das Antriebselement (17) seitlich gegenüber dem Verfahrelement (14) verfahren zu werden.

11. Fahrerloses Transportfahrzeug (1) nach einem der vorangehenden Ansprüche, **dadurch gekennzeichnet, dass**
das Verfahrelement (14) wenigstens ein Paar von Greiferelementen (18) aufweist, welche ausgebildet sind, das Förderhilfsmittel (3) gemeinsam zu greifen,
wobei die beiden Greiferelemente (18) senkrecht zu der horizontalen Richtung (Y) des Ausfahrens/Einfahrens zueinander beabstandet angeordnet sind.

12. Fahrerloses Transportfahrzeug (1) nach einem der vorangehenden Ansprüche, **dadurch gekennzeichnet, dass**
das Verfahrelement (14) wenigstens ein Paar von Greiferelementen (18) aufweist, welche ausgebildet sind, das Förderhilfsmittel (3) gemeinsam zu greifen,
wobei die beiden Greiferelemente (18) in der horizontalen Richtung (Y) des Ausfahrens/Einfahrens zueinander beabstandet angeordnet sind.

13. Fahrerloses Transportfahrzeug (1) nach Anspruch 12, **dadurch gekennzeichnet, dass** die beiden Greiferelemente (18) an einem gemeinsamen Antriebselement (17) soweit zueinander beabstandet angeordnet sind wie zwei korrespondierende Griffelemente (30a) des Förderhilfsmittels (3) in der horizontalen Richtung (Y) zueinander beabstandet angeordnet sind.

14. Fahrerloses Transportfahrzeug (1) nach einem der vorangehenden Ansprüche, **dadurch gekennzeichnet, dass**
das Gestell (10) wenigstens eine Rollenbahn (11), vorzugsweise wenigstens ein Paar von Rollenbahnen (11), aufweist, welche ausgebildet ist, das Förderhilfsmittel (3) rollbar aufzunehmen.

## Claims

1. Automated guided vehicle (1) comprising
a frame (10) which is designed to receive an auxiliary conveying means (3), and at least one displacement element (14) which is designed to be extended and retracted in at least one horizontal direction (Y) relative to the frame (10), beyond the outer dimensions thereof, at least on one side, the displacement element (14) further being designed to carry the auxiliary conveying means (3) along therewith,
**characterized in that**
the displacement element (14) has at least one gripper element (18) which is designed to grip the auxiliary conveying means (3), the displacement element (14) having at least one drive element (17) which is designed to move the gripper element (18) in the horizontal direction (Y) relative to the displacement element (14) at least on one side.

2. Automated guided vehicle (1) according to claim 1, **characterized in that** the displacement element (14) is designed to be extended and retracted in at least one horizontal direction (Y) relative to the frame (10), beyond the outer dimensions thereof, on both sides.

3. Automated guided vehicle (1) according to either claim 1 or claim 2, **characterized in that**
the frame (10) is designed to at least substantially, preferably completely, receive the auxiliary conveying means (3) thereon in the vertical direction (Z).

4. Automated guided vehicle (1) according to any of the preceding claims, **characterized in that**
the displacement element (14) is arranged on the frame (10) and below the received auxiliary conveying means (3) in the vertical direction (Z).

5. Automated guided vehicle (1) according to any of the preceding claims, **characterized in that**
the displacement element (14) is designed to automatically connect to the auxiliary conveying means (3) and to automatically release from the auxiliary conveying means (3).

6. Automated guided vehicle (1) according to any of the preceding claims, **characterized in that**
the drive element (17) is designed to move the gripper element (18) in the horizontal direction (Y) relative to the displacement element (14) on both sides.

7. Automated guided vehicle (1) according to any of the preceding claims, **characterized in that**
the drive element (17) is a continuously closed drive element (17) which is guided substantially in the horizontal direction (Y) about at least one drive (15) and about at least one deflection element (16).

8. Automated guided vehicle (1) according to claim 7, **characterized in that** the continuously closed drive element (17) is a drive belt (17), a drive chain (17) or a drive band (17).

9. Automated guided vehicle (1) according to either claim 7 or claim 8, **characterized in that**
the gripper element (18) has two gripper half-elements (18a) which are arranged on the continuously closed drive element (17) in order to be opened by the deflection of the continuously closed drive element (17) at the drive (15) and/or at the deflection element (16) and closed by the movement between the drive (15) and the deflection element (16).

10. Automated guided vehicle (1) according to any of the preceding claims, **characterized in that**
the gripper element (18) is designed to be moved laterally relative to the displacement element (14) by the drive element (17).

11. Automated guided vehicle (1) according to any of the preceding claims, **characterized in that**
the displacement element (14) has at least one pair of gripper elements (18) which are designed to grip the auxiliary conveying means (3) together, the two gripper elements (18) being arranged spaced apart from one another perpendicular to the horizontal direction (Y) of the extension/retraction.

12. Automated guided vehicle (1) according to any of the preceding claims, **characterized in that**
the displacement element (14) has at least one pair of gripper elements (18) which are designed to grip the auxiliary conveying means (3) together, the two gripper elements (18) being arranged spaced apart from one another in the horizontal direction (Y) of the extension/retraction.

13. Automated guided vehicle (1) according to claim 12,
**characterized in that**, at a common drive element (17), the two gripper elements (18) are arranged spaced as far apart from one another as two corresponding grip elements (30a) of the auxiliary conveying means (3) are arranged spaced apart from one another in the horizontal direction (Y).

14. Automated guided vehicle (1) according to any of the preceding claims, **characterized in that**
the frame (10) has at least one roller track (11), preferably at least one pair of roller tracks (11), which is designed to receive the auxiliary conveying means (3) in a rolling manner.

## Revendications

1. Véhicule de transport (1) sans conducteur, comportant
un châssis (10), qui est conçu pour recevoir un moyen d'aide à la manutention (3) et au moins un élément de déplacement (14), qui est conçu pour être déployé et rétracté dans au moins une direction horizontale (Y) par rapport au châssis (10) au moins d'un côté au-delà de ses dimensions extérieures,
dans lequel l'élément de déplacement (14) est en outre conçu pour entraîner avec lui le moyen d'aide à la manutention (3),
**caractérisé en ce que**
l'élément de déplacement (14) présente au moins un élément de saisie (18), qui est conçu pour saisir le moyen d'aide à la manutention (3), dans lequel l'élément de déplacement (14) présente au moins un élément d'entraînement (17), qui est conçu pour déplacer au moins d'un côté l'élément de saisie (18) dans la direction horizontale (Y) par rapport à l'élément de déplacement (14).

2. Véhicule de transport (1) sans conducteur selon la revendication 1, **caractérisé en ce que**
l'élément de déplacement (14) est conçu pour être déployé et rétracté, dans au moins une direction horizontale (Y) par rapport au châssis (10), des deux côtés au-delà de ses dimensions extérieures.

3. Véhicule de transport (1) sans conducteur selon la revendication 1 ou 2, **caractérisé en ce que**
le châssis (10) est conçu pour recevoir le moyen d'aide à la manutention (3) dans la direction verticale (Z) au moins essentiellement, de préférence totalement, sur lui.

4. Véhicule de transport (1) sans conducteur selon l'une des revendications précédentes, **caractérisé en ce que**
l'élément de déplacement (14) est agencé dans la direction verticale (Z) au-dessus du châssis (10) et au-dessous du moyen d'aide à la manutention (3) reçu.

5. Véhicule de transport (1) sans conducteur selon l'une des revendications précédentes, **caractérisé en ce que**
l'élément de déplacement (14) est conçu pour se lier de manière autonome au moyen d'aide à la manutention (3) et se détacher de manière autonome du moyen d'aide à la manutention (3).

6. Véhicule de transport (1) sans conducteur selon l'une des revendications précédentes, **caractérisé en ce que**
l'élément d'entraînement (17) est conçu pour déplacer l'élément de saisie (18) dans la direction horizontale (Y) par rapport à l'élément de déplacement (14) des deux côtés.

7. Véhicule de transport (1) sans conducteur selon l'une des revendications précédentes, **caractérisé en ce que**
l'élément d'entraînement (17) est un élément d'entraînement fermé sans fin (17), qui est guidé essentiellement dans la direction horizontale (Y) autour d'au moins un actionneur (15) et autour d'au moins un élément de renvoi (16).

8. Véhicule de transport (1) sans conducteur selon la revendication 7, **caractérisé en ce que**
l'élément d'entraînement fermé sans fin (17) est une courroie d'entraînement (17), une chaîne d'entraînement (17) ou une bande d'entraînement (17).

9. Véhicule de transport (1) sans conducteur selon l'une des revendications 7 ou 8, **caractérisé en ce que**
l'élément de saisie (18) présente deux demi-éléments de saisie (18a), qui sont agencés sur l'élément d'entraînement fermé sans fin (17), afin d'être ouvert par le renvoi de l'élément d'entraînement fermé sans fin (17) sur l'actionneur (15) et/ou sur l'élément de renvoi (16) et d'être fermé par le déplacement entre l'actionneur (15) et l'élément de renvoi (16).

10. Véhicule de transport (1) sans conducteur selon l'une des revendications précédentes, **caractérisé en ce que**
l'élément de saisie (18) est conçu pour être déplacé par l'élément d'entraînement (17) latéralement par rapport à l'élément de déplacement (14).

11. Véhicule de transport (1) sans conducteur selon l'une des revendications précédentes, **caractérisé en ce que**
l'élément de déplacement (14) présente au moins une paire d'éléments de saisie (18), qui sont conçus pour saisir ensemble le moyen d'aide à la manutention (3), dans lequel les deux éléments de saisie (18) sont agencés espacés l'un de l'autre perpendiculairement à la direction horizontale (Y) de déploiement/rétraction.

12. Véhicule de transport (1) sans conducteur selon l'une des revendications précédentes, **caractérisé en ce que**
l'élément de déplacement (14) présente au moins une paire d'éléments de saisie (18), qui sont conçus pour saisir ensemble le moyen d'aide à la manutention (3), dans lequel les deux éléments de saisie (18) sont agencés espacés l'un de l'autre dans la direction horizontale (Y) de déploiement/rétraction.

13. Véhicule de transport (1) sans conducteur selon la revendication 12, **caractérisé en ce que**
les deux éléments de saisie (18) sont agencés espacés l'un de l'autre sur un élément d'entraînement (17) commun et espacés l'un de l'autre autant que deux éléments de saisie (30a) correspondants du moyen d'aide à la manutention (3) dans la direction horizontale (Y).

14. Véhicule de transport (1) sans conducteur selon l'une des revendications précédentes, **caractérisé en ce que**
le châssis (10) présente au moins un transporteur à rouleaux (11), de préférence au moins une paire de transporteurs à rouleaux (11), qui est conçu pour recevoir de manière roulante le moyen d'aide à la manutention (3).
